# EUROPÄISCHE PATENTANMELDUNG

(11) **EP 1 610 091 A1**
(43) Veröffentlichungstag der Anmeldung: **28.12.2005**
(21) Anmeldenummer: 04014704.3
(22) Anmeldetag: 23.06.2004
(51) Int. Cl.: G01C 15/00

(54) **Scannersystem und Verfahren zur Erfassung von Oberflächen**

(71) Anmelder: Leica Geosystems AG, 9435 Heerbrugg (CH)
(72) Erfinder: Braunecker, Bernhard, Dr., 9445 Rebstein (CH); Stegmaier, Peter, Dr., 8707 Uetikon a/S (CH); Kipfer, Peter, CH-9442 Berneck (CH)
(74) Vertreter: Kaminski, Susanne

(57) **Zusammenfassung**

Zur Erfassung von Oberflächen wird ein Scannersystem mit einer Strahlungsquelle zur Emission von elektromagnetischer Strahlung (ES), einer Scanvorrichtung zur abtastenden Führung der Strahlung über die Oberfläche und einer Empfängereinheit zum Empfang der von der Oberfläche reflektierten Strahlung (RS) eingesetzt, wobei eine spektrale Trennung der Strahlung zur Analyse der Oberflächeneigenschaften erfolgt und parallel aus der empfangenen Strahlung mit einer Entfernungsmeßeinrichtung Entfernungsinformationen abgeleitet werden.

## Beschreibung

Die Erfindung betrifft ein Scannersystem zur Erfassung von Oberflächen nach dem Oberbegriff des Anspruchs 1, ein Verfahren zur Erfassung von Oberflächen nach dem Oberbegriff des Anspruchs 15 sowie ein Geodätisches Gerät und ein mobiles Abtastsystem.

Zur Erfassung von Oberflächen werden häufig Verfahren verwendet, welche die Topographie einer Struktur, wie z.B. eines Bauwerks, sukzessive abtasten und dabei aufnehmen. Ein gängiger Ansatz ist das Abtasten mittels eines Laserscanners, der jeweils die räumliche Position eines Oberflächenpunktes erfasst, indem durch den Laser die Entfernung zum angezielten Oberflächenpunkt gemessen und diese Messung mit den Winkelinformationen der Laseremission verknüpft werden. Aus diesen Entfernungs- und Winkelinformationen kann die räumliche Lage des erfassten Punktes bestimmt werden. In vielen Fällen wird parallel zu dieser rein geometrischen Erfassung der Oberfläche auch noch eine Bildaufnahme durch eine Kamera durchgeführt, welche neben der visuellen Gesamtansicht auch weitere Informationen, z.B. bzgl. der Oberflächentextur, bereitstellt.

So wird beispielsweise in der WO 97/40342 ein erdgestütztes Verfahren beschrieben, welches durch ortsfest aufgestellte Scannersysteme eine Topographie aufnimmt. Für diese Systeme wird ein fixer Aufstellungspunkt gewählt, der als Basis eines durch Motoren bewirkten Scanvorgangs dient. Die dreidimensionale Ortsinformation des jeweiligen Oberflächenpunktes ist über die Entfernung zum gemessenen Punkt, die Winkelstellung im Zeitpunkt der Messung und den bekannten Standort der scannenden Vorrichtung ableitbar. Dabei sind die Scannersysteme speziell für die Aufgabe der Topographieerfassung ausgelegt und tasten eine Oberfläche durch Bewegung des Scannersystems oder durch Veränderung des Strahlgangs ab.

Daneben können scannende Funktionen in verschiedene andere Geräte als Zusatzfunktionen integriert werden. Aus der WO 2004/036145 ist beispielsweise ein geodätisches Messgerät bekannt, das von seiner Position aus innerhalb des erfassten Bereichs einen Laserstrahl zur Entfernungsmessung emittiert. Solche Messgeräte können ebenfalls zur abtastenden Erfassung von Oberflächen modifiziert bzw. ohne Modifikation betrieben werden. Ein Beispiel hierfür stellen motorisierte Theodoliten oder Totalstationen dar.

Andere Verfahren verwenden mobile Systeme, die eine zu erfassende Struktur durch eine Bewegung des Scannersystems abtasten bzw. die Abtastung unterstützen oder ergänzen. Solche Systeme eignen sich besonders zur Erfassung von linearen oder linear befahrbaren Strukturen, wie beispielsweise Gleisanlagen, Strassen, Tunnelsysteme oder Flugfelder.

Durch solche Erfassungsvorgänge des Stands der Technik werden Bilder bzw. topographische Daten bereitgestellt, die im wesentlichen die Information über die räumliche Verteilung oder Anordnungsbeziehung von Oberflächenpunkten repräsentieren. Gegebenenfalls erlauben zusätzlich aufgenommene Bilder die Ableitung weiterer Informationen.

Damit sind die Struktur und der Verlauf der Oberfläche vergleichsweise gut rekonstruierbar. Nachteilig sind jedoch die fehlenden qualitativen Angaben über die Art und Beschaffenheit der Oberfläche, insbesondere in Hinblick auf die innere Struktur oder Zusammensetzung. So erlauben parallel zur Abtastung aufgenommene Bilder zumeist die Identifikation unterschiedlicher Helligkeitswerte. Diese können zwar hinsichtlich möglicher Strukturen und Zusammensetzungen der Oberfläche und der zugrundeliegenden Vorgänge interpretiert werden, allerdings müssen hierfür weitere Informationen bereit gestellt werden oder aber stark einschränkende Annahmen gemacht werden.

So können beispielsweise bei Aufnahmen von Tunnelsystemen in den parallel erzeugten Bildern dunkle Flecken erkannt werden, die als Wasserflecken interpretiert werden können. Ähnliches gilt für die Erkennung von sich ablösenden Farb- oder Deckschichten, die das Reflexionsverhalten der Oberfläche signifikant verändern. Diese stark vereinfachten Interpretationen setzen naturgemäss eine Einschränkung des Interpretationsspielraums voraus, die auf Vorinformationen - hier die Kenntnis von Wasseraustritten bzw. Fleckenbildungen - basiert.

Eine zur Erfassung der Oberfläche parallele Aufnahme einer Grösse, die eine analytische Charakterisierung der Oberfläche jenseits einer einfachen Betrachtung von Graustufenwerten erlaubt, kann mit Verfahren des Stands der Technik nicht geleistet werden.

Eine Aufgabe der vorliegenden Erfindung besteht darin, ein Scannersystem und Verfahren bereitzustellen, das parallel zur Erfassung der Oberfläche zumindest eine qualitative Analyse einer Oberfläche ermöglicht.

Eine weitere Aufgabe ist die Überprüfung oder Verifizierung von qualitativen Parametern der Oberflächen.

Eine weitere Aufgabe ist die Bereitstellung eines Systems, das eine gegenüber der reinen Erfassung von Oberflächen erhöhte Funktionalität, z.B. durch Ermöglichung einer Warnfunktion bei einer qualitativen Veränderung von erfassten Strukturen, erlaubt.

Die Erfindung betrifft ein Scannersystem bzw. ein Verfahren zur Erfassung einer Oberfläche sowie ein mit diesem System ausgestattetes geodätisches Messgerät oder ein mobiles Abtastsystem.

Erfindungsgemäss wird die Oberfläche parallel zu einer Abtastung spektral sondiert, d.h. so abgetastet, dass aus den spektralen Komponenten der empfangenen Strahlung auf die Zusammensetzung oder den Zustand der sondierten bzw. erfassten Oberfläche geschlossen werden kann. Dabei können grundsätzlich eine spektrale getrennte Emission oder eine spektrale Analyse nach oder beim Empfang der Strahlung erfolgen. Gleichermassen können beide Ansätze kombiniert werden.

Zur spektral getrennten oder separierten Emission kann beispielsweise Strahlung in zwei voneinander getrennten oder auch teilweise überlappenden Spektralbereichen zeitsynchron oder alternierend ausgesandt werden. Hierfür genügt es bei herkömmlichen Scannersystemen des Stands der Technik in Ergänzung zum bereits zur Abtastung und Entfernungsmessung genutzten Laser-Strahlungsquelle einen zweiten Laser zu integrieren, dessen Emission über den gleichen Strahlgang geführt wird, so dass die Oberfläche in identischer Weise abgetastet wird. Dabei kann dessen emittierte Strahlung auf der lang- aber auch kurzwelligen Seite des herkömmlich zur Entfernungsmessung genutzten Lasers liegen, wobei die kurzwellige Option beispielsweise auch Messungen in Fluoreszenz erlauben kann. Parallel oder ergänzend können auch multispektrale oder Weisslichtquellen verwendet werden.

Der Empfang kann beispielsweise mit nur einem Empfänger erfolgen, wenn dieser bei alternierender Emission zeitabhängig die Reflektion in den unterschiedlichen Spektralbereichen empfängt. Bei gleichzeitiger Emission können z.B. zwei spektral selektive Empfänger genutzt werden, aus deren relativen Intensitäten auf das der Reflektion zugrundeliegende Material geschlossen werden kann. Beispielsweise kann ein System zur Detektion von Rost auf Betonoberflächen ausgelegt werden und komplementär zwei Strahlungen im roten und blauen Bereich emittieren. Rote, rosthaltige Oberflächenbereiche werden gegenüber nur feuchten oder trockenen Betonabschnitten eine erhöhte Reflektion im roten Spektralbereich aufweisen, so dass mit diesem Verfahren im Gegensatz zur reinen Hell-Dunkel-Auswertung Rost von nassen Stellen unterschieden werden kann. Ein solches einfaches Verfahren bzw. Scannersystem bietet sich für die Identifikation vorbekannter Muster an, wie sie z.B. bei der Bauwerksüberwachung auftreten.

Einen erweiterten Anwendungsbereich erlauben Scannersysteme und Verfahren, die eine höhere spektrale Auflösung und somit umfangreichere Nutzungsmöglichkeiten bieten. Hierfür werden erfindungsgemäss Spektrometer eingesetzt, um die empfangene Strahlung spektral zu zerlegen bzw. zu analysieren. Dabei können erfindungsgemäss grundsätzlich alle Typen von Spektrometern, wie z.B. Prismen-, Gitter- oder Fouriertransformspektrometer, verwendet werden. Allerdings erlauben die meisten oberflächenabtastenden Systeme nur eine kurze Zeitspanne zur Analyse, da die Ausrichtung des Strahlgangs auf einen zu erfassenden und zu vermessenden Punkt sehr kurz ist. Spektrometer, die eine vergleichsweise lange Zeitdauer zur Analyse benötigen, können nur unter Inkaufnahme von Nachteilen eingesetzt werden, wie z.B. einer erhöhten baulichen Komplexität durch die Verwendung mehrerer im Betrieb zeitlich überlappender Spektrometer oder einer herabgesetzten Scangeschwindigkeit.

Vorteilhaft verwendbar sind somit Spektrometer, die bezogen auf die Abtastgeschwindigkeit hinreichend schnell sind oder aber eine räumliche Demodulation bewirken. Ein Beispiel für letztgenannte Spektrometer stellen Fourierspektrometer nach dem Michelson-Prinzip dar, die über einen geneigten Spiegel verfügen, so dass ein Gangunterschied nicht durch Verstellen des Spiegels sondern in Ortsabhängigkeit resultiert. Das resultierende Interferenzmuster wird von einer geeigneten Anordnung wie z.B. einem Photodiodenarray oder einer CCD/CMOS-Kamera, aufgenommen und nachfolgend einer Transformation bzw. spektralen Zerlegung unterworfen. Hierfür stehen auch für den Scanvorgang hinreichend schnelle Transformationen zur harmonischen Dekomposition zur Verfügung, wie z.B. die diskrete Fouriertransformation (DFT).

Geeignete Bauformen und Herstellungsweisen für miniaturisierte Fourier-Spektrometer können der Dissertation "Micro-sized Fourier Spectrometers" von Omar Manzardo, Universität Neuchatel, Schweiz, Januar 2002, entnommen werden.

Die spektrale Trennung kann somit erfindungsgemäss durch eine spektral selektive Emission, eine spektrale Analyse nach oder beim Empfang oder durch eine Kombination von beiden Ansätzen erfolgen, wobei die gewählte Lösung auch von der Art der zu detektierenden oder analysierenden Oberfläche und deren Zusammensetzung abhängen wird.

Ein erfindungsgemässes Scannersystem und ein erfindungsgemässes Verfahren werden nachfolgend anhand von in der Zeichnung schematisch dargestellten Ausführungsbeispielen rein beispielhaft näher beschrieben. Im einzelnen zeigen
- Fig.1: die Abtastung einer Aussenfläche mit einem geodätischen Gerät des Stands der Technik;
- Fig.2: die schematische Darstellung eines Verfahrens des Stands der Technik zur Abtastung der Innenfläche eines Tunnels mit einem geodätischen Gerät des Stands der Technik;
- Fig.3: die schematische Darstellung eines erfindungsgemässen Verfahrens zur Abtastung der Innenfläche eines Tunnels mit einem erfindungsgemässen mobilen Abtastsystem;
- Fig.4: die schematische Darstellung eines erfindungsgemässen mobilen Abtastsystems des Stands der Technik;

- Fig.5: die Abtastung der Innenfläche einer Struktur im Querschnitt mit einem geodätischen Gerät des Stands der Technik;
- Fig.6: die Abtastung der Innenfläche einer Struktur mit einem erfindungsgemässen geodätischen Gerät;
- Fig.7: eine Beispiel für eine Graustufenaufnahme der Innenseite eines Tunnels mit identifizierbaren Strukturen;
- Fig.8: die schematische Darstellung eines ersten Ausführungsbeispiels eines erfindungsgemässen Scannersystems;
- Fig.9: die schematische Darstellung eines zweiten Ausführungsbeispiels eines erfindungsgemässen Scannersystems;
- Fig.10: die schematische Darstellung eines dritten Ausführungsbeispiels eines erfindungsgemässen Scannersystems;
- Fig.11: die schematische Darstellung eines vierten Ausführungsbeispiels eines erfindungsgemässen Scannersystems;
- Fig.12: die schematische Darstellung eines fünften Ausführungsbeispiels eines erfindungsgemässen Scannersystems und
- Fig.13: die schematische Darstellung eines sechsten Ausführungsbeispiels eines erfindungsgemässen
Scannersystems mit einer Integration in ein geodätisches Messgerät.

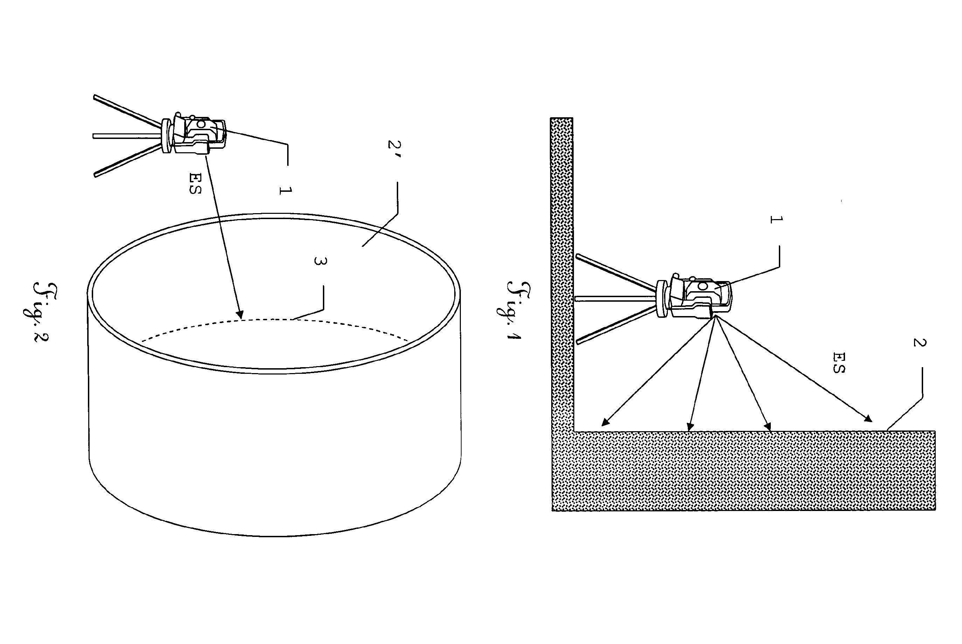

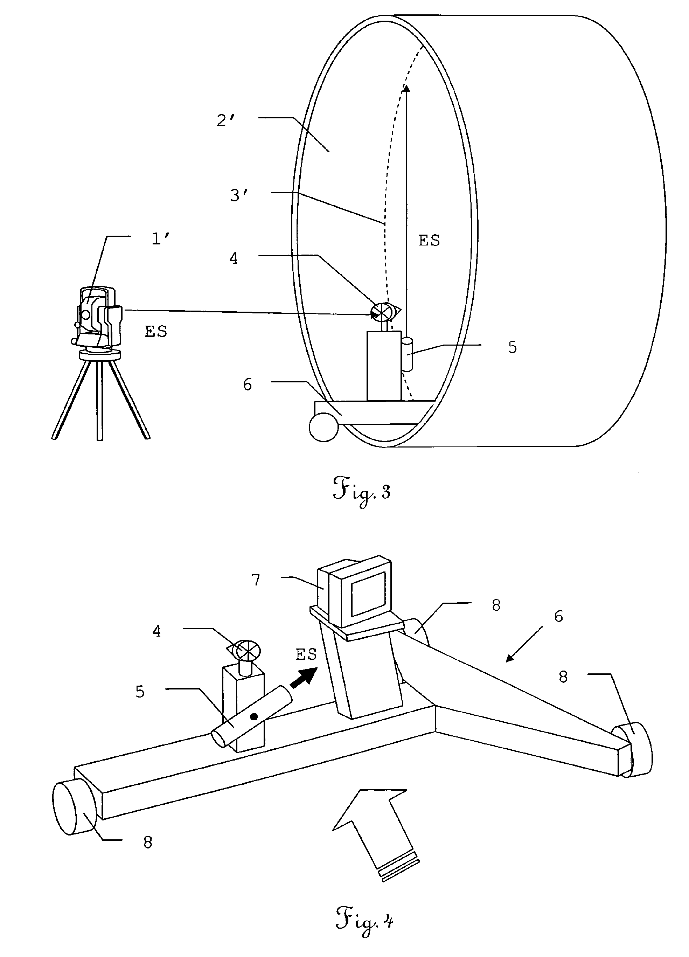

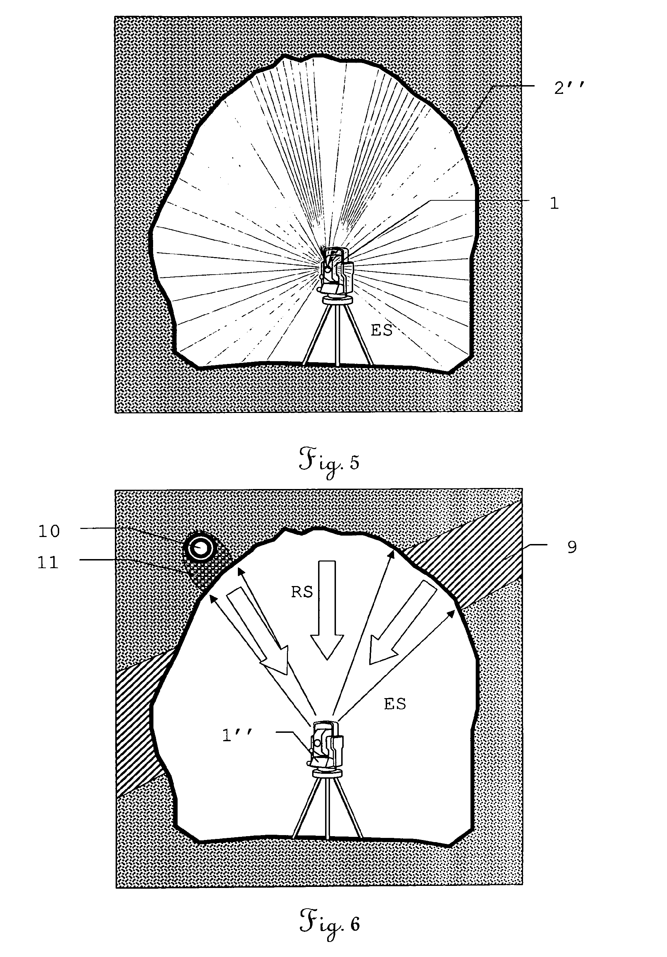

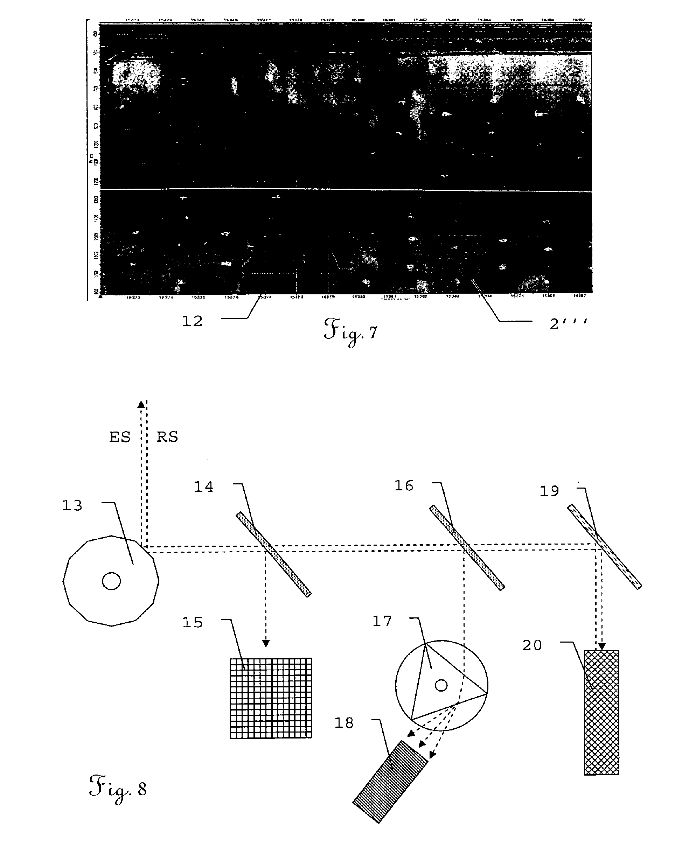

In Fig.1 wird exemplarisch die Abtastung einer Aussenfläche 2 mit einem geodätischen Gerät 1 des Stands der Technik erläutert. Das geodätische Gerät 1 wird in einem hinreichend Abstand von der Aussenfläche 2 positioniert und tastet in unterschiedlichen Winkelpositionen die Aussenfläche 2 ab, wobei elektromagnetische Strahlung ES zur Distanzmessung emittiert wird. Aus den Entfernungsmessungen und den zugeordneten Winkelpositionen kann die Aussenfläche 2 rekonstruiert werden. Die gewünschte Auflösung der Oberflächenerfassung bestimmt dabei die Unterteilung des erfassten Bereichs in Winkelpositionen. Parallel zu den Entfernungsmessungen kann auch eine Bildaufnahme durch eine Kamera im geodätischen Gerät erfolgen.

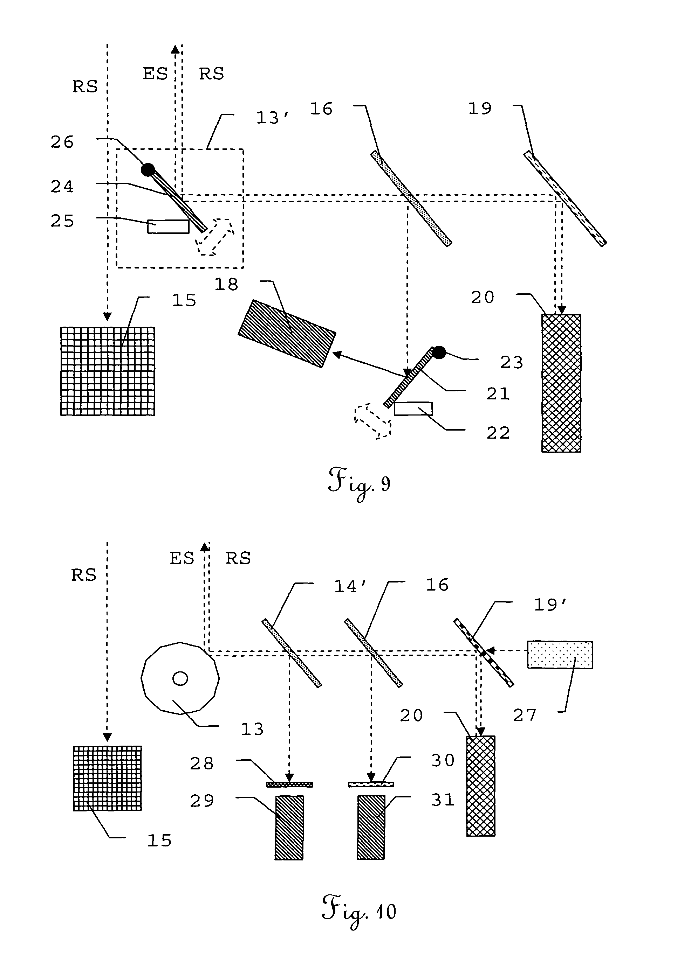

Fig.2 zeigt die schematische Darstellung eines Verfahrens des Stands der Technik zur Abtastung der Innenfläche 2' einer Struktur mit einem geodätischen Gerät 1 des Stands der Technik. In einer zum Vorgehen aus Fig.1 ähnlichen Weise können auch Innenflächen 2' von Strukturen, wie z.B. Tunnels, Unterführungen oder Innenräumen von Gebäuden, mit geodätischen Geräten 1 abgetastet werden. Mit der elektromagnetischen Strahlung ES wird die Innenseite 2' in Form einer spiralförmigen Spur 3 abgetastet und somit erfasst. Aufgrund des bei grösseren Tiefen der Struktur eingeengten Erfassungsbereichs muss das geodätische Gerät 1 zumeist mit häufigen Positionsveränderungen, z.B. im überschlagenden Einsatz, verwendet werden.

Demgegenüber zeigt Fig.3 die schematische Darstellung eines erfindungsgemässen Verfahrens zur Abtastung der Innenfläche 2' desselben Tunnels mit einem erfindungsgemässen mobilen Abtastsystem 6. Innerhalb des Tunnels wird das mobile Abtastsystem 6 linear bewegt, wobei die Innenfläche 2' durch elektromagnetische Strahlung ES kontinuierlich entlang einer spiral- oder zickzackförmigen Spur 3' abgetastet wird. Die Emissionsrichtung wird ständig durch Schwenken der Sende- und Empfangseinheit 5 variiert, wobei die Position des mobilen Abtastsystems 6 durch ein fix positioniertes geodätisches Gerät 1', wie z.B. einem motorisierten Theodoliten mit automatischer Zielverfolgung, bestimmt wird, das kontinuierlich Winkel und Distanz zu einem auf dem mobilen Abtastsystems 6 angebrachten Retroreflektor 4 misst. Die von der Innenfläche 2' reflektierte Strahlung wird von der Sende- und Empfangseinheit 5 registriert und spektral analysiert, so dass neben dem topographischen Verlauf der Oberfläche auch weitere Informationen abgeleitet werden können.

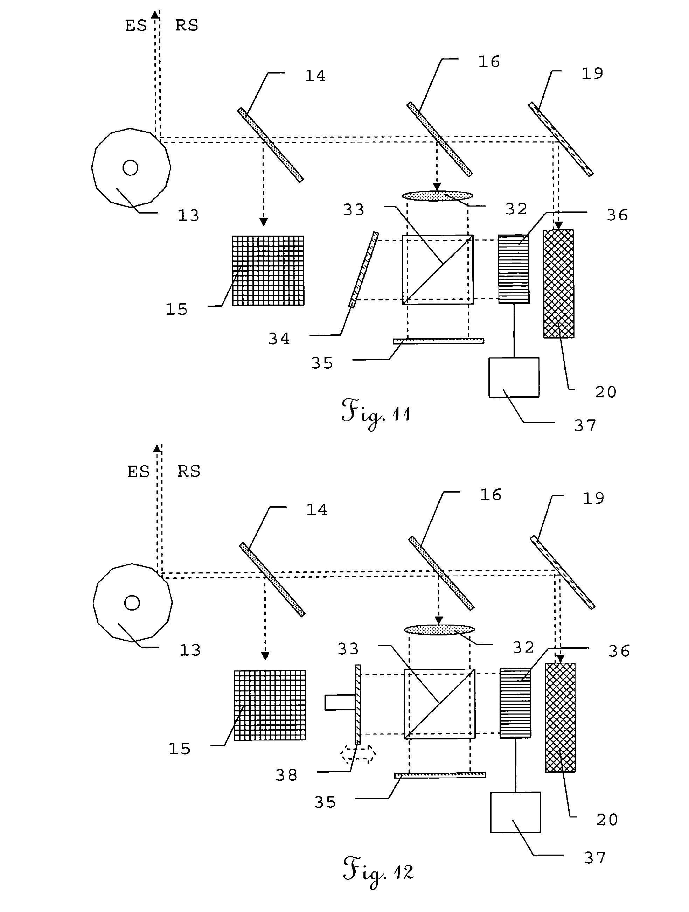

In Fig.4 erfolgt die die schematische Darstellung eines erfindungsgemässen mobilen Abtastsystems 6 des Stands der Technik. Das mobile Abtastsystem 6 basiert auf einem wagenartigen Körper, der über Rollen 8 fahrbar ist. Auf dem Körper sind die um ca. 180° schwenkbare Sende- und Empfangseinheit 5 und der Retroreflektor 4 zusammen mit einer Rechen- und Steuereinheit 7 angeordnet. Die schwenkbare Sende- und Empfangseinheit 5 bewegt sich mit einer Geschwindigkeit die so gewählt ist, dass für jede Winkel- und Längsposition der Sende- und Empfangseinheit 5 sowohl eine Entfernungsmessung als auch die spektrale Analyse durchgeführt werden kann. Die elektromagnetische Strahlung ES wird hierbei über die Sende- und Empfangseinheit 5 emittiert und empfangen, wobei Strahlungsquelle und Sensor sowohl in der schwenkbaren Sende- und Empfangseinheit 5 selbst oder aber auch an anderer Stelle, wie z.B. im Körper des mobilen Abtastsystems 6 angeordnet sein kann. Durch ein erfindungsgemässes mobiles Abtastsystem 6 können, insbesondere linear, befahrbare Strukturen hinsichtlich Gestalt und Zusammensetzung ihrer Oberfläche schnell und in einem fortlaufenden Prozess erfasst und analysiert werden, wobei Innenflächen 2' zudem den Vorteil eines geringen Streulichtanteils mit sich bringen.

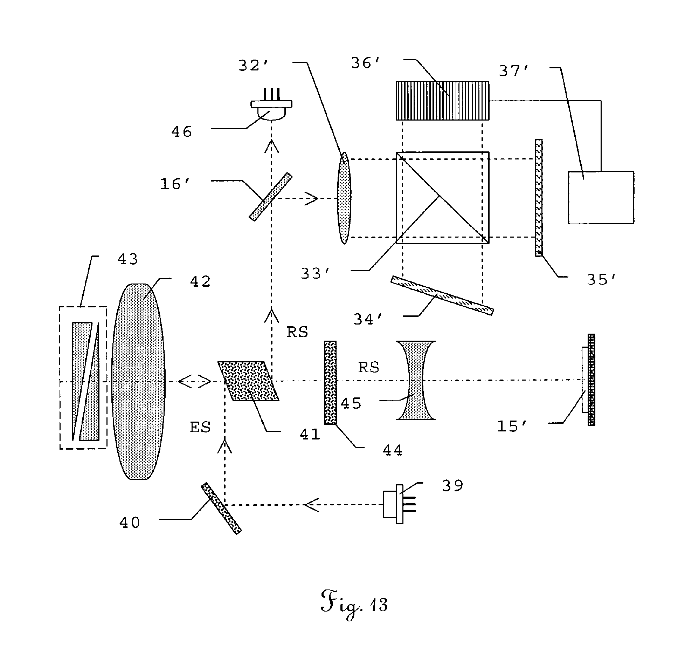

Fig.5 erläutert die Abtastung der Innenfläche 2" einer Struktur im Querschnitt mit einem geodätischen Gerät 1 des Stands der Technik. Durch die elektromagnetische Strahlung ES des geodätischen Geräts 1 erfolgt eine Abtastung der Gestalt der Innenfläche 2" einer Struktur, die hier beispielhaft als nicht ausgeschalter Tunnel dargestellt ist. Die Erfassung erlaubt keine Rückschlüsse auf unter der Innenfläche 2'' befindliche Strukturen und Veränderungen oder Strukturen der Oberflächen unterhalb der Auflösung der Distanzmessung. Wird parallel eine Kamera zur Bildaufnahme verwendet, so ist der Analysebereich zwar erweitert, dennoch kann insbesondere keine Analyse der chemische Zusammensetzung oder des spektralen Reflexionsvermögens der Innenfläche 2" erfolgen.

Demgegenüber erlaubt ein erfindungsgemässes geodätisches Gerät 1'' die in Fig.6 schematisch dargestellte Abtastung der Innenfläche der gleichen Struktur mit einer erweiterten Analysemöglichkeit. Die vom geodätischen Gerät 1 emittierte elektromagnetische Strahlung ES wird von der Oberfläche als reflektierte Strahlung RS mit spektraler Information zurückgesandt und vom geodätischen Gerät 1'' wieder empfangen. Je nach Zusammensetzung der Oberfläche erfolgt eine Veränderung des Spektrums der reflektierten Strahlung RS im Vergleich zur Emission. So können anhand der spektralen Verteilung bzw. der harmonischen Komponenten auch Strukturen unter der Oberfläche identifiziert werden. In diesem Beispiel kann Lage und Ausdehnung einer wasserführenden Schicht 9 anhand der Durchfeuchtung der im Tunnel sichtbaren Oberfläche erkannt werden. Gleichermassen kann aus einer Leitung 10 austretende Flüssigkeit 11 erkannt werden. In ähnlicher Weise kann aber Rost bei in Stahlbeton eingebetteten Baustahlmatten erkannt und lokalisiert werden. In Kombination mit Markierungssubstanzen, die spektral besonders auffällig sind, kann erfindungsgemäss auch eine Lecksuche durchgeführt werden, indem die zu untersuchende Leitung mit der Markierungssubstanz beschickt und die Austrittsstelle mittels Scannersystem lokalisiert werden.

Fig.7 zeigt ein Beispiel für eine Graustufenaufnahme der Innenfläche 2''' eines Tunnels mit identifizierbaren Strukturen. Das Bild entspricht einer Aufnahme von einem Bereich nahe der Tunnelsohle zur Tunneldecke mit einem Erfassungsbereich von fast 180°. Die durchgehend weisse Linie in der unteren Bildhälfte stellt den Hochspannungsdraht einer Oberleitung dar. Dunkle Flecken 12 in der Graustufenaufnahme können beispielsweise als feuchte Stellen interpretiert werden. Jedoch kann es sich alternativ auch um Bereich abblätternden Oberflächenbelags handeln, so dass eine über die Graustufendarstellung hinausgehende Analyse vorteilhaft ist.

Die in den folgenden Fig.8-13 dargestellten Ausführungsformen des erfindungsgemässen Scannersystems bzw. eines erfindungsgemässen geodätischen Geräts werden abstrahiert anhand ihrer wesentlichen Komponenten erläutert. Details der Strahlführung, wie z.B. Elemente von Sende- und Empfangsoptik, werden aus Veranschaulichungsgründen nicht dargestellt. Gleichermassen erfolgt keine detaillierte Darstellung von zur Strahlführung oder zum Ausgleich von durch den Scanvorgang erzeugten Effekten bzw. Artefakten genutzten Scannerkomponenten. Dabei sind die einzelnen Ausführungsbeispiele nur exemplarische Möglichkeiten der Realisierungen unter Nutzung von austauschbaren Komponenten. Insbesondere können die Elemente und deren Anordnungen in den verschiedenen Fig.8-13 miteinander kombiniert werden

In Fig.8 erfolgt die schematische Darstellung eines ersten Ausführungsbeispiels mit einem rotierenden Prismen-Spektrometer 17. Eine in einer Entfernungsmesseinrichtung 20 angeordnete Laserdiode als Strahlungsquelle emittiert über einen Umlenkspiegel 19 und ein Scannerrad 13 elektromagnetische Strahlung ES auf die abzutastende Oberfläche. Das Scannerrad 13 wird hier stellvertretend für eine an sich aus dem Stand der Technik bekannte Scanvorrichtung dargestellt. Nach der Reflektion an der zu erfassenden Oberfläche wird die Strahlung als reflektierte Strahlung RS wieder empfangen und über das Scannerrad 13 und den Umlenkspiegel 19 wieder auf eine in der Entfernungsmesseinrichtung 20 angeordnete Entfernungsmeßeinrichtung geführt, welche aus der reflektierten Strahlung RS eine Entfernungsinformation ableitet, insbesondere nach dem Pulslaufzeit- oder Phasenmeßverfahren.

In diesem Strahlgang befindet sich ein erster Strahlteiler 16, der einen Anteil der reflektierten Strahlung RS auf das Prismen-Spektrometer 17 führt. Dieses weist beispielsweise ein rotierbares gleichseitiges Prisma oder eine sternförmige Anordnung von Prismen bzw. Prismenflächen auf. Durch die Rotation des Prismas werden die geometrischen Bedingungen kontinuierlich verändert und die spektralen Anteile nacheinander auf einen nachgelagerten Detektor 18 geleitet, so dass dieser ein Spektrum der reflektierten Strahlung RS registriert und in einer nachgeschalteten Elektronik auswertet. Hierbei müssen Scannerrad 13 und Prismen-Spektrometer 17 so in ihrer Rotation synchronisiert werden, dass für jeden zu erfassenden Oberflächenpunkt eine Spektralanalyse durch das Prismen-Spektrometer 17 erfolgen kann. Über einen zweiten Strahlteiler 14 erfolgt die Auskopplung eines weiteren Anteils der reflektierten Strahlung RS, der zur Bilderfassung und -verarbeitung auf eine Kamera 15, z.B. einen CCD- oder CMOS-Kamerachip, geführt wird.

Fig.9 zeigt die schematische Darstellung eines zweiten Ausführungsbeispiels mit einem Gitter-Spektrometer. Eine in einer Entfernungsmesseinrichtung 20 angeordnete Strahlungsquelle emittiert über einen Umlenkspiegel 19 und ein durch ein Piezoelement 25 um eine Achse 26 schwenkbare Spiegelfläche 24 als Scanvorrichtung 13' elektromagnetische Strahlung ES auf die abzutastende Oberfläche. Die scannend schwenkbare Spiegelfläche 24 wird hier stellvertretend für eine weitere aus dem Stand der Technik bekannte Scaneinrichtung dargestellt. Nach der Reflektion an der zu erfassenden Oberfläche wird die Strahlung als reflektierte Strahlung RS wieder empfangen und über die schwenkbare Spiegelfläche 24 und den Umlenkspiegel 19 wieder auf eine in der Entfernungsmesseinrichtung 20 angeordnete Entfernungs-meßeinrichtung geführt. Ein erster Strahlteiler 16 koppelt aus dem Strahlgang Licht auf das Gitter-Spektrometer aus. Dieses weist ein um eine Achse 23 schwenkbares Gitter 21 auf, welches in diesem Ausführungsbeispiel - insbesondere als Blazed-Gitter - in Reflexion betrieben wird. Als Verstellvorrichtung wird ein Piezoelement 22 verwendet. Durch die Bewegung des schwenkbaren Gitters 21 werden nacheinander die Extrema der verschiedenen Ordnung auf einen Detektor 18 projiziert, so dass eine spektrale Analyse durchgeführt werden kann. Achsparallel zur Empfangseinrichtung für das Spektrometer und die Entfernungsmesseinrichtung ist ein Strahlgang für eine Kamera 15 ausgebildet. Die Kamera 15 kann je nach Empfindlichkeit und Einsatzzweck zur Aufnahme das Licht der Strahlungsquelle der Entfernungsmesseinrichtung, eine eigene Lichtquelle, z.B. eine LED, oder Tageslicht verwenden. Erfindungsgemäss können auch andere Typen von Gitter-Spektrometern zur Anwendung kommen, so z.B. ein lamellares Gitter-Inferometer oder ein Gitter auf einem gekrümmten und verstellbaren Spiegel.

Fig.10 erläutert ein drittes Ausführungsbeispiel eines erfindungsgemässen Scannersystems anhand einer schematischen Darstellung. Eine in einer Entfernungsmesseinrichtung 20 angeordnete Strahlungsquelle emittiert über einen dichroitischen Umlenkspiegel 19' und ein Scannerrad 13 elektromagnetische Strahlung ES auf die abzutastende Oberfläche. Parallel hierzu erfolgt über den dichroitischen Umlenkspiegel 19' eine Einkopplung von weiterer elektromagnetischer Strahlung in den gleichen Strahlgang, wobei diese Strahlung durch eine zweite Strahlungsquelle 27 erzeugt wird. Diese zweite Strahlungsquelle 27 kann beispielsweise als Laserdiode, LED oder auch als thermischer Emitter ausgebildet sein. Nach der Reflektion an der zu erfassenden Oberfläche wird die Strahlung als reflektierte Strahlung RS wieder empfangen und das Scannerrad 13 und den dichroitischen Umlenkspiegel 19' wieder auf eine in der Entfernungsmesseinrichtung 20 angeordnete Entfernungsmeßeinrichtung geführt. Ein erster Strahlteiler 16 koppelt aus dem Strahlgang Licht auf einen ersten spektral selektiven Empfänger aus, der hier exemplarisch aus der Kombination von Detektor 31 und vorgesetztem spektralen Filter 30 besteht. In analoger Weise koppelt ein zweiter Strahlteiler 14' Licht auf einen zweiten spektral selektiven Empfänger aus, der hier ebenfalls aus Detektor 29 und vorgesetztem spektralen Filter 28 besteht. Beide spektral selektiven Empfänger werden so ausgelegt, dass unterschiedliche Wellenlängenbereiche erfasst werden. Aus dem Verhältnis der registrierten Intensitäten können Abschätzungen oder einfache Identifikationen von Oberflächenmerkmalen abgeleitet werden. In diesem Ausführungsbeispiel wird die im Infraroten liegende Strahlung der in der Entfernungsmesseinrichtung 20 angeordneten Strahlungsquelle durch die Emission einer blauen Laserdiode als zweiter Strahlungsquelle 27 ergänzt. Die beiden spektral selektiven Empfänger werden durch ihre zugeordneten Filter im blauen und infraroten Bereich empfindlich gestaltet. Achsparallel zur Empfangsrichtung des Scannerrads 13 ist ein Strahlgang für eine Kamera 15 ausgebildet. Alternativ können statt zwei Detektoren mit zugeordneten Filtern auch Sensoren verwendet werden, die bereits spektral schmalbandige Empfindlichkeiten im relevanten Bereich aufweisen. Ebenso kann ein einziger Detektor verwendet werden, der durch unterschiedliche, variable Filter spektral selektiv gestaltet wird.

Fig.11 zeigt die schematische Darstellung eines vierten Ausführungsbeispiels des erfindungsgemässen Scannersystems. Eine in einer Entfernungsmesseinrichtung 20 angeordnete Laserdiode emittiert über einen Umlenkspiegel 19 und ein Scannerrad 13 elektromagnetische Strahlung ES auf die abzutastende Oberfläche, wobei nach der Reflektion an der zu erfassenden Oberfläche der Empfang der reflektierten Strahlung RS über das Scannerrad 13 und den Umlenkspiegel 19 in einer Entfernungsmeßeinrichtung der Entfernungsmesseinrichtung 20 erfolgt. In diesem Strahlgang befindet sich ein erster Strahlteiler 16, der einen Anteil der reflektierten Strahlung RS auf ein Fourier-Spektrometer in Michelson-Anordnung führt. Dieses weist eine Linse 32 zur Kollimierung der reflektierten Strahlung RS und eine Teilerplatte 33 auf, welche die Strahlung auf einen ersten Interferometerspiegel 35 und einen verkippten Spiegel als zweiten Interferometerspiegel 34 führt. Über die Teilerplatte 33 wird die Strahlung unter Superposition auf einem Sensor 36, z.B. eine lineare oder flächenhafte Anordnung von Photodioden geführt, dessen Signale in einer nachgeschalteten Recheneinheit spektral zerlegt werden, z.B. mittels diskreter Fourier-Transformation. Anstelle des verkippten Spiegels als zweiten Interferometerspiegel 34 kann auch ein verdrehbares Littrow-Gitter Verwendung finde, dessen Bewegung über ein Piezoelement oder einen hochpräzisen Steppermotor bewirkt werden kann. Diese Anordnung mit räumlicher Modulation erlaubt eine zeitlich schnelle spektrale Zerlegung, welche auch den Betrieb mit schnellen Scannerbewegungen erlaubt. Zur parallelen Bildaufnahme erfolgt über einen zweiten Strahlteiler 14 die Auskopplung eines weiteren Anteils der reflektierten Strahlung RS aus dem Strahlgang, der auf eine Kamera 15, geführt wird.

Fig.12 zeigt die schematische Darstellung eines fünften Ausführungsbeispiels, das in diesem Beispiel bis auf den speziellen Typ des scannenden Fourier-Spektrometers mit dem in Fig.11 gezeigten Ausführungsbeispiel übereinstimmt. In diesem fünften Ausführungsbeispiel wird ebenfalls ein Fourier-Spektrometer in Michelson-Anordnung mit einer Linse 32 zur Kollimierung der reflektierten Strahlung RS und einer Teilerplatte 33 verwendet. Die Strahlung wird auf einen ersten Interferometerspiegel 35 und einen durch einen Piezoaktuator oder einen elektrostatischen Kamm als Antrieb in Richtung des einen Arms des Interferometers bewegbaren Spiegel als zweiten Interferometerspiegel 38 geführt. Über die Teilerplatte 33 wird die Strahlung unter Superposition auf einen Sensor 36, z.B. eine lineare oder flächenhafte Anordnung von Photodioden gelenkt, wobei deren Signale zur spektralen Zerlegung in einer nachgeschalteten Recheneinheit 37 analysiert werden.

Als ein Beispiel für die Integration eines erfindungsgemässen Scannersystems in ein geodätisches Messgerät zeigt Fig.13 die schematische Darstellung eines sechsten Ausführungsbeispiels. In einem Theodolit mit Scanvorrichtung wird durch fix positionierte Laserdiode 39 und Empfangsvorrichtung 46 eine Entfernungsmessung zu Oberflächenpunkten innerhalb des Gesichtsfeldes des Theodoliten durchgeführt. Die Laserdiode 39 emittiert elektromagnetische Strahlung ES über ein Umlenkspiegelelement 40 auf eine erste geneigte Fläche eines doppelseitigen Umlenkspiegelelementes 41, von dem diese Strahlung über eine Objektivlinse 42 mit nachgelagertem gegeneinander verdrehbaren Keilen 43 als Scanvorrichtung ausgesandt wird. Die nach einer Reflektion wieder über die Objektivlinse 42 empfangene Strahlung wird von einem rückreflektierenden Spiegelelement 44 auf die zweite Fläche des Umlenkspiegelelementes 41 und von dort zur fix positionierten Empfangsvorrichtung 46 geführt. Im Strahlgang zur Empfangsvorrichtung 46 befindet sich ein erster Strahlteiler 16' der einen Anteil der Strahlung auf ein Fourier-Spektrometer aus Linse 32', Teilerplatte 33' und einem ersten Interferometerspiegel 35' und einem zweiten verkippten Interferometerspiegel 34' auskoppelt. In einer zur Anordnung in Fig.11 analogen Arbeitsweise wird das Licht der beiden Arme des Interferometers überlagert und auf einen Sensor 36' projiziert. Eine nachgelagerte Recheneinheit 37' dient zur Fourier-Transformation. In diesem Ausführungsbeispiel erfolgt die scannend abtastende Bewegung des Laserstrahls zur Abtastung einer Oberfläche durch die gegeneinander verdrehbaren Keile des Ausrichtmittels 43. Die Aufnahme eines Bildes kann durch eine im Strahlgang nach dem rückreflektierenden Spiegelelement 44 angeordnete Kamera 15' mit vorgeschaltetem Fokussierglied 45 erfolgen.

Während in Fig.11 und Fig.13 der - räumlich variable - Gangunterschied im Fourier-Spektrometer durch ein Verkippen eines Spiegels erzeugt wurde, erfolgte in Fig.12 eine longitudinale Bewegung eines Spiegels, welche ebenfalls einen - nun zeitlich variierenden - Gangunterschied bewirkte. Erfindungsgemäss können jedoch auch weitere Fourier-Spektrometer eingesetzt werden, so kann auch ein Flüssigkristall zur polarisationsabhängigen Erzeugung eines optischen Gangunterschieds in Transmission verwendet werden, insbesondere mit vorgeschalteter Polarisationstrennung aus Viertelwellenlängenplättchen und Polarisator.

## Patentansprüche

1. Scannersystem zur Erfassung von Oberflächen (2',2''), mit wenigstens
• einer Strahlungsquelle zur Emission von elektromagnetischer Strahlung, insbesondere von Laserlicht oder Weisslicht,
• einer Scanvorrichtung (13,13',43) zur abtastenden Führung der Strahlung über die Oberfläche (2',2''),
• einer Empfängereinheit zum Empfang der von der Oberfläche (2',2'') reflektierten Strahlung, mit einer Entfernungsmeßeinrichtung (20) zur Ableitung von Entfernungsinformationen aus der empfangenen Strahlung, insbesondere nach dem Pulslaufzeit- oder Phasenmeßverfahren,
**dadurch gekennzeichnet, dass**
Strahlungsquelle und Empfängereinheit so ausgebildet und aufeinander abgestimmt sind, dass eine spektrale Trennung der Strahlung erfolgt.

2. Scannersystem nach Anspruch 1,
**dadurch gekennzeichnet, dass**
die Strahlungsquelle in wenigstens zwei getrennten Wellenlängenbereichen emittiert, insbesondere durch wenigstens
- zwei Laseremitter mit unterschiedlichen Wellenlängen,
- zwei spektral breitbandige Quellen mit einem nicht überlappenden Wellenlängenbereich oder
- einen Laser und eine spektral breitbandige Quelle, z.B. eine Weisslichtquelle.

3. Scannersystem nach Anspruch 1 oder 2,
**dadurch gekennzeichnet, dass**
die Empfängereinheit einen spektral trennenden Sensor aufweist, insbesondere ein Spektrometer oder einen variablen Filter.

4. Scannersystem nach Anspruch 3,
**dadurch gekennzeichnet, dass**
die Empfängereinheit einen ersten Strahlteiler (16) aufweist, welcher die empfangene Strahlung zur Nutzung durch die Entfernungsmeßeinrichtung (20) und den Sensor aufteilt.

5. Scannersystem nach Anspruch 3 oder 4,
**dadurch gekennzeichnet, dass**
das Spektrometer als ein
• Prismenspektrometer,
• Gitterspektrometer oder
• Fourierspektrometer
ausgebildet ist.

6. Scannersystem nach Anspruch 5,
**dadurch gekennzeichnet, dass**
das Fourierspektrometer vom Michelson-Typ ist und
- als scannendes Interferometer, insbesondere mit einem Piezo-Aktuator oder einem elektrostatischen Kamm als Antrieb, oder
- als räumlich modulierendes Interferometer, insbesondere mit einem verkippten Spiegel (34,34') oder einem verdrehbaren Littrow-Gitter,
ausgebildet ist.

7. Scannersystem nach Anspruch 6,
**dadurch gekennzeichnet, dass**
das räumlich modulierende Interferometer
- ein lineares oder flächiges Photodioden-Array,
- eine CCD-Kamera oder
- eine CMOS-Kamera
aufweist.

8. Scannersystem nach Anspruch 5,
**dadurch gekennzeichnet, dass**
das Fourierspektrometer einen Flüssigkristall zur polarisationsabhängigen Erzeugung eines optischen Gangunterschieds in Transmission aufweist, insbesondere mit vorgeschalteter Polarisationstrennung aus Viertelwellenlängenplättchen und Polarisator.

9. Scannersystem nach Anspruch 5,
**dadurch gekennzeichnet, dass**
das Gitterspektrometer zeitlich scannend ausgebildet ist, insbesondere in Reflexion als
- Lamellares Gitter-Spektrometer,
- Gitter auf einem gekrümmten und verstellbaren Spiegel.

10. Scannersystem nach Anspruch 5,
**dadurch gekennzeichnet, dass**
das Prismenspektrometer zeitlich scannend ausgebildet ist, insbesondere mit einem rotierenden Prisma (17) oder einer rotierenden Prismenanordnung.

11. Scannersystem nach einem der vorangehenden Ansprüche,
**gekennzeichnet durch**
eine Kamera (15) zur Bildaufnahme und/oder Bildverarbeitung, insbesondere in Kombination mit einem zweiten Strahlteiler (14) in der Empfängereinheit, welcher einen Teil der empfangenen Strahlung auf die Kamera (15) führt.

12. Scannersystem nach einem der vorangehenden Ansprüche,
**gekennzeichnet durch**
eine Streulicht-Unterdrückung.

13. Geodätisches Gerät (1'), insbesondere Theodolit, mit einem Scannersystem nach einem der Ansprüche 1 bis 12.

14. Mobiles Abtastsystem (6) zur Erfassung und/oder Überwachung von Bauwerken mit einem Scannersystem nach einem der Ansprüche 1 bis 12.

15. Verfahren zur Erfassung von Oberflächen (2',2"), insbesondere vermittels eines Scannersystems nach einem der Ansprüche 1 bis 12, mit den Schritten
- Aussenden von elektromagnetischer Strahlung,
- Empfangen der Strahlung nach Reflexion an der Oberfläche (2',2"),
- Analysieren der empfangenen Strahlung,
wobei
• die Schritte oberflächenabtastend mehrfach wiederholt werden, und
• beim Analysieren der Strahlung eine Entfernungsinformation abgeleitet wird,
**dadurch gekennzeichnet, dass**
das Analysieren der Strahlung mit einer spektralen Trennung der Strahlung erfolgt.

16. Verfahren nach Anspruch 15,
**dadurch gekennzeichnet, dass**
die Strahlung beim Empfang spektral zerlegt wird und/oder die Strahlung beim Aussenden spektral selektiv emittiert wird.

17. Verfahren nach Anspruch 15 oder 16,
**dadurch gekennzeichnet, dass**
die Strahlung beim Empfang interferometrisch spektral zerlegt wird.

18. Verfahren nach Anspruch 15, 16 oder 17,
**dadurch gekennzeichnet, dass**
aus der spektralen Trennung auf eine Eigenschaft der Oberfläche (2',2''), z.B. deren chemische Zusammensetzung oder Feuchtigkeit, geschlossen wird.
